# EUROPEAN PATENT APPLICATION

(11) **EP 2 538 134 A1**
(43) Date of publication of application: **26.12.2012**
(21) Application number: 11742372.3
(22) Date of filing: 15.02.2011
(51) Int. Cl.: F21V 29/00, B60K 35/00, F21S 2/00, G02F 1/13, F21Y 101/02

(54) **BACKLIGHT UNIT FOR VEHICLES AND DISPLAY DEVICE FOR VEHICLES**

(30) Priority: 15.02.2010 JP 2010030470
(71) Applicant: Yazaki Corporation, Minato-ku Tokyo 108-8333 (JP)
(72) Inventor: MATSUSHITA, Junichi, Shizuoka (JP); AOKI, Kunimitsu, Shizuoka (JP)
(74) Representative: Grünecker, Kinkeldey, Stockmair & Schwanhäusser
(86) International application number: PCT/JP2011/053178
(87) International publication number: WO 2011/099633

(57) **Abstract**

A high-intensity back light is enabled by satisfying temperature conditions under an on-board environment.

There is provided a vehicle back light unit having a plurality of light source (21) which illuminate a display unit from the rear thereof and a circuit board (22) which is provided to the rear of the display unit and on which the plurality of light sources are mounted, characterized by having a radiating unit (23) which is provided so as to face a rear surface of the circuit board (22), a heat conductive member (24) which conducts heat of the circuit board (22) to the radiating unit (23), and a crimping unit (25) for crimping the heat conductive member (24) to both the circuit board (22) and the radiating unit (23) by fixing the circuit board (22) and the heat conductive member (24) to the radiating unit (23).

## Description

### <Technical Field>

The present invention relates to a vehicle back light unit having a plurality of light sources which illuminate a display unit from the rear thereof and a circuit board which is provided to the rear of the display unit and on which the plurality of light sources are mounted, and a vehicle display system having the vehicle back light unit.

### <Background Art>

In recent years, in association with increase in volume and diversification of types of information required by the driver when he or she drives, a projection type display unit called a head up display (HUD) unit is adopted in which information which cannot be displayed within a meter cluster in relation to limited space is displayed in the form of a virtual image on a windshield so that the information is visible to the driver together with a foreground view which is visible through the virtual image in a superposed fashion.

An illumination system described in Patent Literature 1 is known as a vehicle back light unit for a display unit used in an HUD unit. In the illumination system, a plurality of LEDs are mounted on a circuit board, and a lens array having a plurality of lenses which correspond individually to the plurality of LEDs is interposed between the circuit board and the display unit. By utilizing the lens array, light emitted from the light sources is emitted towards the display unit at wide angle to suppress the variation in intensity of light so emitted.

### <Related Art Literature>

### <Patent Literature>

Patent Literature 1: JP-A-2005-228606

### <Summary of the Invention>

### <Problem that the Invention is to Solve>

In recent years, there have been demands for high-luminance and high-output display units, and to satisfy such demands, a plurality of high-intensity LEDs or a larger number of LEDs have had to be used. However, heat generated from the LEDs is not dissipated to a sufficient extent to the atmosphere outside the display unit via the circuit board. Therefore, the temperature conditions under the on-board temperature environment cannot be satisfied, causing difficulty in realizing high luminance and high output for vehicle back light units.

Consequently, in view of the problem described above, it is a problem to be solved by the invention to provide a vehicle back light unit and a vehicle display system which can satisfy the temperature conditions under the on-board environment to thereby enable the generation of high-intensity and high-output back light.

### <Means for Solving the Problem>

With a view to solving the problem, according to a first invention of the present invention, there is provided a vehicle back light unit having a plurality of light source which illuminate a display unit from the rear thereof and a circuit board which is provided to the rear of the display unit and on which the plurality of light sources are mounted, comprising a radiating unit which is provided so as to face a rear surface of the circuit board, a heat conductive member which conducts heat of the circuit board to the radiating unit, and a crimping unit for crimping the heat conductive member to both the circuit board and the radiating unit by fixing the circuit board and the heat conductive member to the radiating unit.

According to the vehicle back light unit of the first invention, the circuit board is fixed to the radiating unit by the crimping unit in such a state that the heat conductive member is crimped to both the circuit board and the radiating unit. Then, when the plurality of light sources are turned to illuminate the display unit from the rear thereof, heat is generated in the circuit board from the plurality of light sources. The heat so generated is conducted to the radiating unit by the heat conductive member and is then radiated by the radiating unit.

According to a second invention, there is provided a vehicle back light unit as set forth in the first invention above, characterized in that a plurality of depressions are formed on a crimping surface of the radiating unit which is crimped to the heat conductive member, and in that the heat conductive member is formed deformable so as to be closely attached to surfaces of the plurality of depressions as a result of being so crimped.

According to the vehicle back light unit of the second aspect, the heat conductive member flows into the plurality of depressions on the crimping surface of the radiating unit as a result of being crimped by the crimping unit, whereby the heat conductive member is brought into contact with the surfaces of the depressions.

With a view to solving the problem, according to a third invention of the present invention, there is provided a vehicle display system characterized by having the vehicle back light unit set forth in the first or second invention above, a display unit which is illuminated from the rear thereof by the vehicle back light unit and a lens array which is disposed between the display unit and the plurality of light sources and which has lenses which correspond individually to the plurality of light sources.

According to the vehicle display system of the third invention, light emitted by the plurality of light sources of the vehicle back light unit is emitted from the lenses of the lens array which correspond individually to the light sources towards the display unit at controlled angles. Then, heat generated as a result of the illumination of the plurality of light sources in the vehicle back light unit is conducted to the radiating unit by the heat conductive member and is radiated by the radiating unit.

### <Advantage of the Invention>

As has been described above, according to the vehicle back light unit of the first invention, the circuit board is fixed to the radiating unit by the crimping unit in such a state that the heat conductive member is crimped to both the circuit board and the radiating unit. Therefore, heat generated from the plurality of light sources is conducted to the radiating unit by the heat conductive member, so that the heat can be radiated from the radiator members, thereby making it possible to increase the heat radiation performance of the light sources. Consequently, even by utilizing high-intensity and high-output light sources, heat generated therefrom can be radiated as described above. Therefore, the temperature conditions under the on-board environment, whereby the display unit can be illuminated by the high-intensity back lights. In addition, the display unit can be illuminated highly intensely, and therefore, and this can contribute to increasing the performance of the display unit.

According to the vehicle back light unit of the second invention, in addition to the advantage provided by the first invention, the plurality of depressions are formed on the crimping surface of the radiating unit, and the heat conductive member is crimped to the surfaces of the depressions, thereby making it possible to prevent the deterioration in head conductivity as a result of air entering between the heat conductive member and the radiating unit. In addition, the contact area between the heat conductive member and the radiating unit can be increased, and therefore, the heat conductivity can be increased further. Consequently, higher-intensity and higher-output light sources can be used, and this can contribute to increasing further the performance of the display unit.

As has been described above, according to the vehicle display system of the third invention, the increase in the radiation performance of the vehicle back light unit allows the usage of high-intensity and high-output light sources for the back light unit. Thus, the intensity of light that is emitted at the angle controlled by the lenses of the lens array is increased, whereby the display unit can be illuminated by the high-intensity vehicle back light unit. Thus, the luminance and visibility of the display unit can be increased. Consequently, the high-luminance and high-output vehicle display system can be provided, thereby making it possible to increase the product value.

### <Brief Description of the Drawings>

Fig. 1 is an external view of a vehicle display system having a vehicle back light unit of the invention.
Fig. 2 is an exemplary sectional view depicting a schematic configuration of the vehicle back light unit and the vehicle display system.
Fig. 3 is a perspective view depicting an example of an external appearance of the vehicle back light unit.
Fig. 4 is a perspective view depicting an external appearance of a lens array shown in Fig. 2.
Fig. 5 shows another example of a radiating unit of the vehicle back light unit, of which Fig. 5(a) shows a crimping surface of a heat conductive member, and Fig. 5(b) shows a side thereof.
Fig. 6 is a partial enlarged view which illustrates another example of a crimping unit of the vehicle back light unit.

### <Mode for Carrying out the Invention>

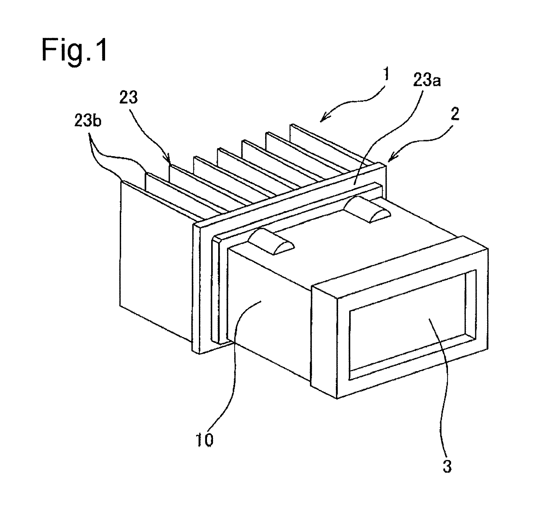

Hereinafter, an embodiment in which a vehicle display system having a vehicle back light unit according to the invention is applied to a display system for head up display will be described by reference to Figs. 1 to 6.

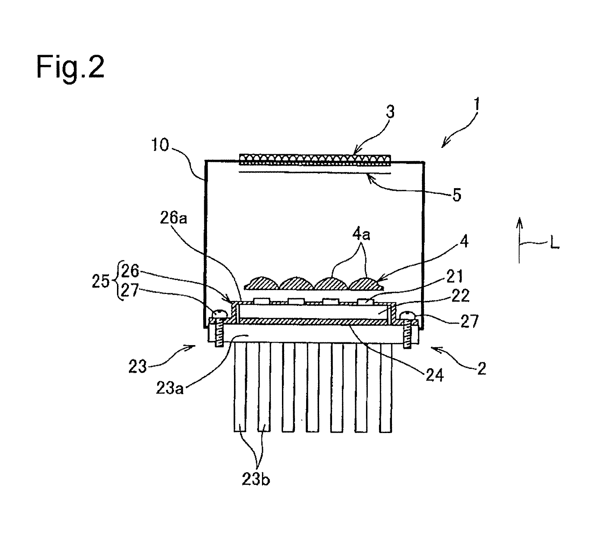

Figs. 1 and 2, a head up display (HUD) display system 1 is installed in a vehicle by being provided in an instrument panel thereof and corresponds to the vehicle display system described in the first to third inventions. The HUD display system 1 includes a vehicle back light unit 2, a display unit 3, a lens array 4 and a diffuser sheet 5. In addition, the HUD display system 1 is used in a known head up display (HUD) unit. In the HUD system, light according to the display contents to be displayed on the display unit 3 is reflected on to a windshield of the vehicle by a reflecting member, so that a virtual image of the display contents projected on to the windshield and a foreground view which becomes visible through the virtual image are made visible to the driver in a superposed fashion.

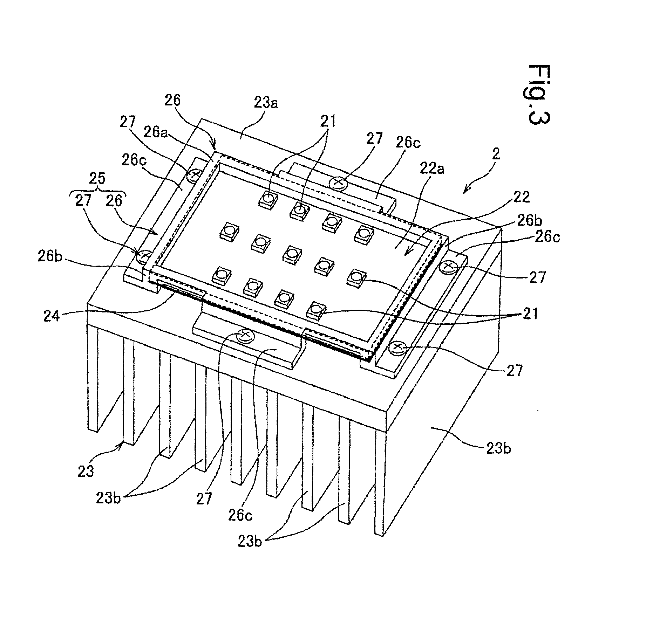

As shown in Figs. 2 and 3, the vehicle back light unit 2 has a plurality of light sources 21, a circuit board 22, a radiating unit 23, a heat conductive member 24 and a crimping unit 25.

The plurality of light sources 21 are provided so as to face a rear surface side of the display unit 3 and emit light which illuminates the display unit 3, that is, light which is transmitted through the display unit 3. Each of the plurality of light sources 21 utilizes an LED (Light Emitting Diode). It should be noted that a fluorescent tube, a bulb or the like can also be used as the light source 21.

As shown in Fig. 3, the circuit board 22 is a printed circuit board having, for example, a rectangular board-like shape, and the plurality of light sources 21 are mounted into a predetermined pattern on the circuit board 22. In this embodiment, the circuit board 22 is formed of a highly heat conductive material such as a aluminum substrate, and 13 light sources 21 are arranged into three rows on a surface 22a of the circuit board 22. The circuit board 22 has a wiring pattern which is connected to a control unit, not shown, and enables the plurality of light sources 21 to be controlled to be turned on or off by the control unit.

As is generally known, the radiating unit 23 is a heat sink that is used to radiate heat and is formed of a heat conductive metallic member. As shown in Fig. 3, the radiating unit 23 has a plate-shaped base portion 23a and a plurality of radiator plates 23b which are erected from the base portion 23a in a Z-axis direction as seen in Fig. 3. Additionally, the base portion 23a is larger in size than the circuit board 22 and is formed into a square or rectangular shape so that the circuit board 22 can be mounted thereon. Each of the plurality of radiator plates 23b is formed into the shape of a plate which extends long in a Y-axis direction along an X-Y plane as shown in Fig. 3. In this embodiment, the radiating unit 23 is described as being made up of the heat sink only, however, in place of this configuration, for example, various forms can be adopted, in one of which a combination of a heat sink and a cooling fan can be used as the radiating unit 23.

The heat conductive member 24 is formed into the shape of a heat conductive sheet which conducts heat of the circuit board 22 to the radiating unit 23. In the event that the heat conductive member 24 is made up of a radiator sheet which utilizes a soft silicone gel, since the material is in the form of gel, even in case there are irregularities on a rear surface of the circuit board 22, the heat conductive member 24 can be tightly secured to the circuit board 22. In addition, by the heat conductive member 24 being interposed between the circuit board 22 and the radiating unit 23, heat of the circuit board 22 is conducted to the radiator 23 by the heat conductive member 24.

The crimping unit 25 has a crimping stay 26 and a plurality of (six in Fig. 3) screws 27 with which the crimping stay 26 is fixed to the radiating unit 23. In addition, the crimping stay 26 pressure secures the heat conductive member 24 to a surface of the base portion 23a of the radiating unit 23 in such a state that the circuit board 22 and the heat conductive member 24 are superposed one on the other. The crimping stay 26 has a frame 26a, a plurality of connecting portions 26b and a plurality of fixing portions 26c.

The frame 26a is formed into a frame which covers edge portions of the circuit board 22 in such a state that the plurality of light sources 21 on the circuit board 22 are exposed. The connecting portion 26b is formed so as to extend from each of lateral sides of the frame 26a towards the radiating unit 23. The fixing portion 26c is formed into the shape of a plate which extends from an end portion of each of the connecting portions 26b along the surface of the base portion 23a of the radiating unit 23. The fixing portion 26c has one or a plurality of (two in Fig. 3) screw holes, and the screw holes penetrate the fixing portion 26c. Additionally, the screws 27 screw into the thread holes in the fixing portions 26c of the crimping stays 26 and holes in the base portion 23a of the radiating unit 23, whereby the crimping stays 26 are fixed to the surface of the base portion 23a of the radiating unit 23.

The connecting portion 26b is designed so that when a surface 22a of the circuit board 22 and an inner surface of the frame 26a are brought into contact with each other, a distance from the inner surface of the frame 26a to the surface of the base portion 23a of the radiating unit 23 is smaller than a thickness of the circuit board 22 and the heat conductive member 24 when they are superposed one on the other. By designing the connecting portion 26b in this way, the heat conductive member 24 is allowed to be crimped to both the circuit board 22 and the radiating unit 23.

Here, an example of a fabrication method of the vehicle back light unit 2 configured as described above will be described as follows.

Firstly, the circuit board 22 and the heat conductive ember 24 are superposed one on the other, and then, in this state, the crimping stay 26 of the crimping unit 25 is brought into abutment with the circuit board 22 so that the edge portions of the circuit board 22 are covered by the crimping stay 26. Then, the crimping stay 26 and the radiating unit 23 are caused to approach each other and the crimping stay 26 is positioned in a predetermined position on the surface of the base portion 23a of the radiating unit 23. Then, the plurality of screws 27 are individually tightly screwed into the crimping stay 26 and the radiating unit 23, whereby the crimping stay 26 is fixed to the radiating unit 23. As this occurs, in response to the crimping stay 26 being so fastened with the screws, the heat conductive member 24 is pressed against the radiating unit 23 by the circuit board 22, whereby the heat conductive member 24 is crimped to both the circuit board 22 and the radiating unit 23.

Thus, according to the vehicle back light unit 2 that as has been described heretofore, the circuit board 22 is fixed to the radiating unit 23 by the crimping unit 25 in such a state that the heat conductive member 24 is crimped to both the circuit board 22 and the radiating unit 23. By adopting this configuration, heat generated from the plurality of light sources 21 is conducted to the radiating unit 23 by the heat conductive member 24, so that the heat so conducted can be radiated from the radiating unit 23. Therefore, the heat radiation performance of the light sources 21 can be increased. Consequently, even when the high-intensity and high-output light sources 21 emitting heat of high temperatures are used, the heat so emitted can be radiated. Therefore, the temperature conditions under the on-board environment can be satisfied, thereby making it possible to illuminate the display unit 3 with high-intensity back light. In addition, the display unit 3 can be illuminated highly brightly, which contributes to increasing the performance of the display unit 3.

Next, in Figs. 1 and 2, the display unit 3 of the HUD display system 1 is disposed on an illumination side of the vehicle back light unit 2 so that the display unit 3 is displayed from the rear thereof. Used for the display unit 3 are an LCD (Liquid Crystal Display), a TFT liquid crystal (Thin Film Transistor), and a DSTN (Dual-scan Super Twisted Nematic) liquid crystal which are known as devices which can transmit light from a back side thereof. The display unit 3 displays images representing numbers, characters and the like which are required by the control unit, not shown. Then, the display unit 3 is illuminated to display images by transmitted light from the vehicle back light unit 2.

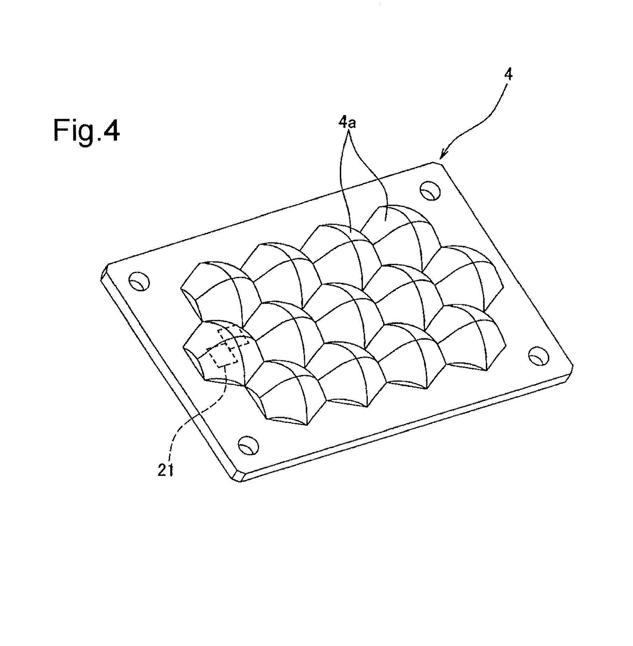

As shown in Figs. 2 and 4, the lens array 4 is configured as an optical element in which a plurality of substantially semi-spherical lenses 4a are arranged. The lens array 4 is formed of a light transmissive member so that the plurality of lenses 4a are arranged into a number of parallel rows while being caused to correspond individually to the plurality of light sources 21 of the vehicle back light unit 2. The lens array 4 is assembled to a housing 10 so that convex portions of the lenses 4a project towards the display unit 3 and flat surfaces on opposite sides of the lenses 4a face the vehicle back light unit 2. Then, the lenses 4a of the lens array 4 emit light incident thereon from the vehicle back light unit 2 towards the display unit 3 at controlled angles.

The diffuser sheet 5 is formed into the shape of a thin sheet and is assembled to the housing 10 so as to be interposed between the display unit 3 and the lens array 4. The diffuser sheet 5 emits light incident thereon from the lens array 4 towards the display unit 3 in a diffusing fashion. In this embodiment, the diffuser sheet 5 is described as being situated close to the display unit 3 while situated far away from the lens array 4, however, the invention is not limited to this configuration. Thus, various forms can be adopted in which the diffuser sheet 5 is disposed substantially equidistant from the display unit 3 and the lens array 4 or the diffuser sheet 5 is disposed close to the lens array 4.

As shown in Fig. 1, the housing 10 is formed of, for example, a metallic material, a synthetic resin or the like into a substantially box-shaped accommodation case. As shown in Fig. 2, the housing 10 is attached to the vehicle back light unit 2 so as to accommodate the crimping unit 25 of the vehicle back light unit 2 and the lens array 4 in an interior thereof. In addition, by the housing 10 being attached to the vehicle back light unit 2, the housing 10 positions to fix in place the lens array 4, the diffuser sheet 5 and the display unit 3 sequentially in that order from the light sources 21 in a light shining direction L (refer to Fig. 2) of the plurality of light sources 21 of he vehicle back light unit 2. The housing 10 causes the vehicle back light unit 2 and the display unit 3 to face each other with a predetermined interval defined therebetween in such a state that the vehicle back light unit 2 is fixed to one end of the housing 10 with the radiating unit 23 exposed to the outside of the housing and the display unit 3 is fixed to the other end thereof.

Next, an example of an operation (function) of the HUD display unit 1 described above will be described below.

When images are displayed on the display unit 3 and the individual light sources 21 of the vehicle back light unit 2 are illuminated, light emitted by the light sources 21 enters the interior of the lens array 4, and after having been guided through the interior of the lens array 4, the light is emitted from the lenses 4a towards the display unit 3 at the controlled angles. The light so emitted travels within the housing 10 and is diffused by the diffuser sheet 5 so as to travel towards the display unit 3. Then, by the light so diffused being transmitted through the display unit 3, the display unit 3 illuminates itself using the light that has transmitted therethrough.

As this occurs, each of the plurality of light sources 21 of the vehicle back light unit 2 which are being illuminated generates heat. Heat so generated by the plurality of light sources 21 is conducted to the circuit board 22 and is then conducted from the heat conductive member 24 which is crimped to the circuit board 22 to the radiating unit 23. Then, the radiating unit 23 radiates the heat conducted thereto from the heat conductive member 24 to the atmosphere outside the HUD display system 1. Therefore, the radiation performance of the HUD display system 1 can be increased.

According to the HUD display system 1 that has been described above, the intensity and output of the light sources 21 can be increased by the increase in radiation performance of the vehicle back light unit 2, and therefore, the intensity of light that is emitted by the lenses 4a of the lens array 4 at the controlled angles is also increased, whereby the display unit 3 can be illuminated by the high-intensity vehicle back light unit 2. Thus, the increase in intensity and visibility of the display unit can be realized. Consequently, since the high-intensity and high-output HUD display system 1 can be provided, the produce value can be increased.

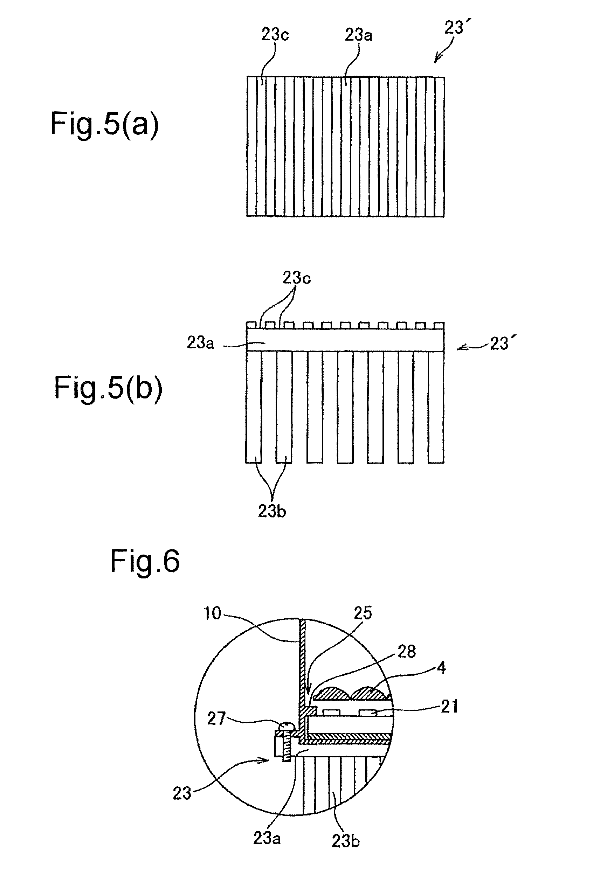

In the embodiment, the crimping surface between the radiating unit 23 and the heat conductive member 24 of the vehicle back light unit 2 is described as being flat. However, in place of this configuration, an example in which the radiation efficiency is increased further will be described below by reference to drawings of Figs. 5(a), 5(b).

In Figs. 5(a), 5(b), a radiation means 23' in which the radiation efficiency is increased has the same basic configuration as that of the radiation means 23, but in the radiation means 23', the construction of a crimping surface of a base portion 23a is changed. In the radiating unit 23', a plurality of grooves 23c are formed in the crimping surface through grooving work. The plurality of grooves 23c correspond to the depressions set forth in the first to third inventions, and the heat conductive member 24 is deformed to enter the grooves 23c, whereby the heat conductive member 24 is brought into contact with respective surfaces of the grooves 23c. By the contact of the heat conductive member 24 with the grooves 23c, the contact area of the radiating unit 23' with the heat conductive member 24 becomes larger by a total of vertical surface areas of the plurality of grooves 23c than that of the radiating unit 23 (the crimping surface of which is flat), and therefore, the radiation performance can be increased.

In particular, when the crimping surface with the heat conductive member 24 is wide, air enters between the crimping surface and the heat conductive member 24, deteriorating heat conduction. In addition, when the temperature of the vehicle back light unit 2 is increased with air being present between the crimping surface and the heat conductive member 24, the volume of air is expanded, deteriorating heat conduction. However, in the radiating unit 23', the contact area is increased by the formation of the plurality of grooves 23c in the crimping surface, and therefore, even in the event that air enters between the crimping surface and the heat conductive member 24, the deterioration in heat conductivity can be reduced.

In this way, the plurality of grooves 23c (depressions) are formed in the crimping surface of the radiating unit 23' and the heat conductive member 24 is crimped to the surfaces of the plurality of grooves 23c. Therefore, the deterioration in heat conductivity due to air entering between the heat conductive member 24 and the radiating unit 23 can be prevented. Additionally, the contact area of the heat conductive member 24 with the radiating unit 23 can be increased, and therefore, the heat conductivity can be increased further. Consequently, higher-intensity and higher-output light sources 21 can be used, and this can contribute to increasing further the performance of the display unit 3.

In addition, while the radiating unit 23' is described as realizing the depressions set forth in the first to third inventions described above by the plurality of grooves 23c, the invention is not limited to this configuration. For example, the heat conductivity can be increased in the way described above even when various forms are adopted in which the depressions are realized by increasing the degree of roughness of the crimping surface of the radiating unit 23' or the depressions are realized by providing low cylinders or prisms on the crimping surface.

Further, in the embodiment, the crimping unit 25 is described as fixings the frame 26a to the radiating unit 23 with the plurality of screws 27, that is, the frame 26a of the crimping unit 25 is described as being formed separately from the housing 10 of the HUD display system 1. In place of this configuration, an embodiment shown in Fig. 6 can be adopted.

For example, as shown in Fig. 6, a plurality of abutment portions 28 are formed which project from an inner wall of the housing 10 so as to be brought into abutment with a surface of the circuit board 22. Then, the housing 10 is screwed to be fixed to the radiating unit 23, whereby the circuit board 22 is pressed against the heat conductive member 24 by the plurality of abutment portions 28, so that the heat conductive member 24 is crimped to both the circuit board 22 and the radiating unit 23. The function and advantage described above can be obtained even when the crimping unit 25 is realized by the screws 27 and the abutment portions 28.

In addition, in the embodiment, while the diffuser sheet 5 is used in the configuration of the HUD display system 1, in place of this configuration, an embodiment can be adopted in which the diffuser sheet 5 is deleted from the configuration of the HUD display system 1.

In the embodiment, while the HUD display system 1 is described as being used for the HUD system, the invention is not limited to this configuration. For example, the invention can also be applied to various types of on-board equipment including a car navigation system, a fare meter for a taxi, and the like.

The embodiments that have been described heretofore only illustrate the representative embodiments of the invention, and the invention is not limited to the embodiments. Namely, the invention can be modified variously without departing from the essential part of the invention.

While the invention has been described in detail or by reference to the specific embodiments, it is obvious to those skilled in the art that various alterations or modifications can be made to the invention without departing from the spirit and scope of the invention.

This patent application is based on Japanese Patent Application (No. 2010-030470) filed on February 15 in 2010, the contents of which are incorporated herein by reference.

### <Description of Reference Numerals>

1 Vehicle display system (Display system for head up display); 2 Vehicle back light unit; 3 Display unit; 4 Lens array; 21 Light source; 22 Circuit board; 23 Radiating unit; 24 Heat conductive member; 25 Crimping unit; 26 Crimping stay; 27 Screw.

## Claims

1. A vehicle back light unit having a plurality of light source which illuminate a display unit from the rear thereof and a circuit board which is provided to the rear of the display unit and on which the plurality of light sources are mounted, comprising:
a radiating unit provided so as to face a rear surface of the circuit board;
a heat conductive member which conducts heat of the circuit board to the radiating unit; and
a crimping unit crimping the heat conductive member to both the circuit board and the radiating unit by fixing the circuit board and the heat conductive member to the radiating unit.

2. The vehicle back light unit as set forth in Claim 1, wherein a plurality of depressions are formed on a crimping surface of the radiating unit crimped to the heat conductive member, and
the heat conductive member is formed deformable so as to be closely attached to surfaces of the plurality of depressions as a result of being so crimped.

3. A vehicle display system, comprising:
the vehicle back light unit set forth in Claim 1 or 2;
a display unit which is illuminated from the rear thereof by the vehicle back light unit; and
a lens array which is disposed between the display unit and the plurality of light sources and which has lenses which correspond individually to the plurality of light sources.
